(19) Europäisches Patentamt / European Patent Office / Office européen des brevets

(11) **EP 3 199 999 A1**

(12) **EUROPEAN PATENT APPLICATION**
published in accordance with Art. 153(4) EPC

(43) Date of publication:
02.08.2017 Bulletin 2017/31

(51) Int Cl.:
*G02B 13/00* (2006.01)

(21) Application number: 15843623.8

(22) Date of filing: 17.09.2015

(86) International application number:
PCT/JP2015/004749

(87) International publication number:
WO 2016/047112 (31.03.2016 Gazette 2016/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 25.09.2014 JP 2014195434

(71) Applicant: Panasonic Intellectual Property
Management Co., Ltd.
Osaka-shi, Osaka 570-6207 (JP)

(72) Inventors:
• IIYAMA, Tomoko
2-1-61 Shiromi, Chuo-ku,
Osaka-shi
Osaka 540-6207 (JP)
• SUEYOSHI, Masafumi
2-1-61 Shiromi, Chuo-ku,
Osaka-shi
Osaka 540-6207 (JP)

(74) Representative: Grünecker Patent- und
Rechtsanwälte
PartG mbB
Leopoldstraße 4
80802 München (DE)

(54) **LENS SYSTEM AND IMAGE CAPTURE DEVICE**

(57) A lens system according to the present disclosure includes a plurality of lens groups, each having at least one lens element, the lens system including, in order from an object side to an image side, a first lens group that is fixed with respect to an image plane in focusing from an infinity in-focus condition to a close-object in-focus condition; an aperture diaphragm; a second lens group that moves in a direction of an optical axis in the focusing; a third lens group that is fixed with respect to the image plane in the focusing; a fourth lens group that moves in the direction of the optical axis in the focusing; and a lens group closest to the image side, wherein the following conditions (1) and (2) are satisfied:

$$2.5 < |f2/f4| < 6.5...(1)$$

$$0.5 < |f/f4| < 1.5...(2)$$

where
f2 is a focal length of the second lens group,
f4 is a focal length of the fourth lens group, and
f is a focal length of the entire optical system in an infinity in-focus condition.

## FIG. 1

**Description**

TECHNICAL FIELD

The present disclosure relates to a lens system and an imaging device.

BACKGROUND ART

There is a high demand for reduction in size and increase in performance to an imaging device and a camera system provided with an imaging element performing photoelectric conversion, and various lens systems used for such imaging device and camera system have been proposed.

Patent Literature 1 discloses a lens system including, in order from an object side, a first lens group having positive refractive power, a second lens group having negative refractive power, a third lens group having positive or negative refractive power, and a fourth lens group having positive refractive power, wherein the first lens group is fixed with respect to an image plane in focusing, and the second lens group and the fourth lens group move in an optical axis direction in focusing.

Citation List

Patent Literature

PTL 1: Unexamined Japanese Patent Publication No. 2012-168456

SUMMARY OF THE INVENTION

A lens system according to the present disclosure includes a plurality of lens groups, each having at least one lens element, the lens system including, in order from an object side to an image side, a first lens group that is fixed with respect to an image plane in focusing from an infinity in-focus condition to a close-object in-focus condition; an aperture diaphragm; a second lens group that moves in a direction of an optical axis in the focusing; a third lens group that is fixed with respect to the image plane in the focusing; a fourth lens group that moves in the direction of the optical axis in the focusing; and a lens group closest to the image side, wherein the following conditions (1) and (2) are satisfied:

$$2.5 < |f2/f4| < 6.5 ...(1)$$

$$0.5 < |f/f4| < 1.5 ...(2)$$

where

f2 is a focal length of the second lens group,
f4 is a focal length of the fourth lens group, and
f is a focal length of the entire optical system in an infinity in-focus condition.

Further, an imaging device according to the present disclosure includes a lens system, and an imaging element that receives an optical image formed by the lens system and converts the received image into an electric image signal. The lens system includes a plurality of lens groups, each having at least one lens element, the lens system including, in order from an object side to an image side, a first lens group that is fixed with respect to an image plane in focusing from an infinity in-focus condition to a close-object in-focus condition; an aperture diaphragm; a second lens group that moves in a direction of an optical axis in the focusing; a third lens group that is fixed with respect to the image plane in the focusing; a fourth lens group that moves in the direction of the optical axis in the focusing; and a lens group closest to the image side, wherein the following conditions (1) and (2) are satisfied:

$$2.5 < |f2/f4| < 6.5 ...(1)$$

$$0.5 < |f/f4| < 1.5...(2)$$

where

f2 is a focal length of the second lens group,
f4 is a focal length of the fourth lens group, and
f is a focal length of the entire system in an infinity in-focus condition.

BRIEF DESCRIPTION OF DRAWINGS

FIG. 1 is a lens arrangement diagram of a lens system from an infinity in-focus condition to a closest in-focus condition according to a first exemplary embodiment (Numerical Example 1).
FIG. 2 is an axial aberration diagram of the lens system from an infinity in-focus condition to a closest in-focus condition according to Numerical Example 1.
FIG. 3 is a lateral aberration diagram of the lens system in a basic state in which image blur compensation is not performed and in an image blur compensation state, in an infinity in-focus condition according to Numerical Example 1.
FIG. 4 is a lens arrangement diagram of a lens system from an infinity in-focus condition to a closest in-focus condition according to a second exemplary embodiment (Numerical Example 2).
FIG. 5 is an axial aberration diagram of the lens system from an infinity in-focus condition to a closest in-focus condition according to Numerical Example 2.
FIG. 6 is a lateral aberration diagram of the lens system in a basic state in which image blur compensation is not performed and in an image blur compensation state in an infinity in-focus condition according to Numerical Example 2.
FIG. 7 is a lens arrangement diagram of a lens system from an infinity in-focus condition to a closest in-focus condition according to a third exemplary embodiment (Numerical Example 3).
FIG. 8 is an axial aberration diagram of the lens system from an infinity in-focus condition to a closest in-focus condition according to Numerical Example 3.
FIG. 9 is a lateral aberration diagram of the lens system in a basic state in which image blur compensation is not performed and in an image blur compensation state, in an infinity in-focus condition according to Numerical Example 3.
FIG. 10 is a lens arrangement diagram of a lens system from an infinity in-focus condition to a closest in-focus condition according to a fourth exemplary embodiment (Numerical Example 4).
FIG. 11 is an axial aberration diagram of the lens system from an infinity in-focus condition to a closest in-focus condition according to Numerical Example 4.
FIG. 12 is a lateral aberration diagram of the lens system in a basic state in which image blur compensation is not performed and in an image blur compensation state, in an infinity in-focus condition according to Numerical Example 4.
FIG. 13 is a schematic configuration diagram of an imaging device according to a fifth exemplary embodiment.
FIG. 14 is a diagram showing lens surface data according to Numerical Example 1.
FIG. 15 is a diagram showing aspherical surface data according to Numerical Example 1.
FIG. 16 is a diagram showing various data according to Numerical Example 1.
FIG. 17 is a diagram showing data of lens groups according to Numerical Example 1.
FIG. 18 is a diagram showing lens surface data according to Numerical Example 2.
FIG. 19 is a diagram showing aspherical surface data according to Numerical Example 2.
FIG. 20 is a diagram showing various data according to Numerical Example 2.
FIG. 21 is a diagram showing data of lens groups according to Numerical Example 2.
FIG. 22 is a diagram showing lens surface data according to Numerical Example 3.
FIG. 23 is a diagram showing aspherical surface data according to Numerical Example 3.
FIG. 24 is a diagram showing various data according to Numerical Example 3.
FIG. 25 is a diagram showing data of lens groups according to Numerical Example 3.
FIG. 26 is a diagram showing lens surface data according to Numerical Example 4.
FIG. 27 is a diagram showing aspherical surface data according to Numerical Example 4.
FIG. 28 is a diagram showing various data according to Numerical Example 4.
FIG. 29 is a diagram showing data of lens groups according to Numerical Example 4.

DESCRIPTION OF EMBODIMENTS

Hereinafter, exemplary embodiments will be described in detail with reference to the accompanying drawings. It is noted, however, that descriptions in more detail than necessary will sometimes be omitted. For example, detailed descriptions of well-known items and duplicate descriptions of substantially the same configuration will sometimes be omitted. This is to avoid unnecessary redundancy in the following description and to facilitate understanding by those skilled in the art.

Note that the present inventors provide the accompanying drawings and the following descriptions so as to facilitate fully understanding of the present disclosure by those skilled in the art, and these are not intended to limit the subject matter defined by the claims.

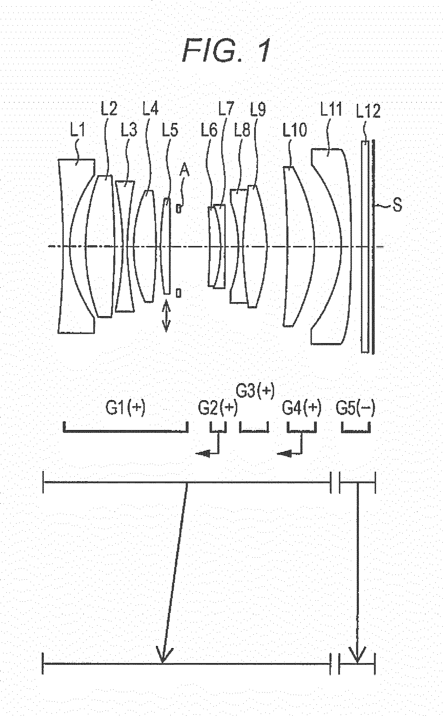

FIGS. 1, 4, 7 and 10 are each a lens arrangement diagram of a lens system according to each of the first to fourth exemplary embodiments, and each diagram illustrates the lens system in an infinity in-focus condition.

The lens system according to the present disclosure has two photographing states according to a distance to an object. Specifically, the lens system has first state M1 in which focusing is performed within a first focusing range and second state M2 in which focusing is performed in a second focusing range. The first focusing range ranges from an infinity object to a first finite object. The second focusing range ranges from a second finite object at a shorter distance than the infinity object to a third finite-distance object at a shorter distance than a first finite-distance object.

Upon the change from first state M1 to second state M2, the lens groups from first lens group G1 to fourth lens group G4 integrally move toward the object side, with respect to first state M1. Here, a first finite object distance in first state M1 indicates that the distance from image plane S to an object is 0.3 m, a second finite object distance indicates that the distance from image plane S to an object is 0.3 m, and a third finite object distance indicates that the distance from image plane S to an object in second state M2 is the shortest.

Arrows in each of FIGS. 1, 4, 7, and 10 are formed by linking the positions of lens groups in first state M1 and second state M2.

In FIGS. 1, 4, 7, and 10, an arrow attached to a specific lens group and parallel to an optical axis indicates a direction along which the lens group moves in focusing from an infinity in-focus condition to a close-object in-focus condition. In FIGS. 1, 4, 7, and 10, an arrow attached to a lens group and perpendicular to the optical axis indicates that the lens group moves in a direction perpendicular to the optical axis for optically compensating image blur. A straight line at the rightmost side in each diagram indicates a position of image plane S.

FIRST EXEMPLARY EMBODIMENT

As illustrated in FIG. 1, in the lens system according to the first exemplary embodiment, first lens group G1 having positive power includes, in order from an object side to an image side, biconcave first lens element L1, biconvex second lens element L2, biconcave third lens element L3, biconvex fourth lens element L4, and fifth lens element L5 having a positive meniscus shape with a convex surface facing the object side.

In the lens system according to the first exemplary embodiment, second lens group G2 having positive power includes only a doublet including, in order from the object side to the image side, sixth lens element L6 having a positive meniscus shape with a convex surface facing the image side and seventh lens element L7 having a negative meniscus shape with a convex surface facing the image side. Aperture diaphragm A is disposed between first lens group G1 and second lens group G2.

In the lens system according to the first exemplary embodiment, third lens group G3 having positive power includes only a doublet including, in order from the object side to the image side, biconcave eighth lens element L8 and biconvex ninth lens element L9.

In the lens system according to the first exemplary embodiment, fourth lens group G4 having positive power includes only tenth lens element L10 having a positive meniscus shape with a convex surface facing the image side.

In the lens system according to the first exemplary embodiment, fifth lens group G5 having negative power includes only eleventh lens element L11 having a negative meniscus shape with a concave surface facing the object side.

In focusing from an infinity in-focus condition to a close-object in-focus condition, second lens group G2 and fourth lens group G4 move to the object side along an optical axis in the lens system according to the first exemplary embodiment.

SECOND EXEMPLARY EMBODIMENT

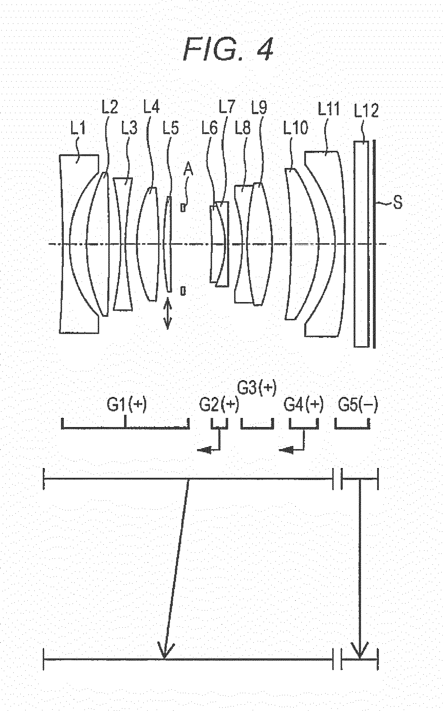

As illustrated in FIG. 4, in a lens system according to the second exemplary embodiment, first lens group G1 having positive power has the configuration similar to the first exemplary embodiment.

In the lens system according to the second exemplary embodiment, second lens group G2 having positive power has the configuration similar to the first exemplary embodiment. Aperture diaphragm A is disposed between first lens group G1 and second lens group G2.

In the lens system according to the second exemplary embodiment, third lens group G3 having positive power includes only a doublet including, in order from the object side to the image side, biconcave eighth lens element L8 and biconvex ninth lens element L9.

In the lens system according to the second exemplary embodiment, fourth lens group G4 having positive power has the configuration similar to the first exemplary embodiment.

In the lens system according to the second exemplary embodiment, fifth lens group G5 having negative power has the configuration similar to the first exemplary embodiment.

In focusing from an infinity in-focus condition to a close-object in-focus condition, second lens group G2 and fourth lens group G4 move to the object side along an optical axis in the lens system according to the second exemplary embodiment.

THIRD EXEMPLARY EMBODIMENT

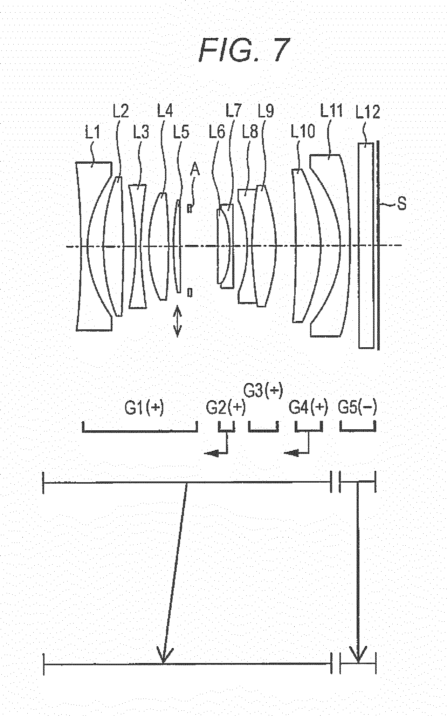

As illustrated in FIG. 7, in a lens system according to the third exemplary embodiment, first lens group G1 having positive power has the configuration similar to the first exemplary embodiment.

In the lens system according to the third exemplary embodiment, second lens group G2 having positive power includes only a doublet including, in order from the object side to the image side, sixth lens element L6 having a positive meniscus shape with a convex surface facing the image side and seventh lens element L7 having a negative meniscus shape with a flat surface at the image side. Aperture diaphragm A is disposed between first lens group G1 and second lens group G2.

In the lens system according to the third exemplary embodiment, third lens group G3 having positive power includes only a doublet including, in order from the object side to the image side, biconcave eighth lens element L8 and biconvex ninth lens element L9.

In the lens system according to the third exemplary embodiment, fourth lens group G4 having positive power has the configuration similar to the first exemplary embodiment.

In the lens system according to the third exemplary embodiment, fifth lens group G5 having negative power has the configuration similar to the first exemplary embodiment.

In focusing from an infinity in-focus condition to a close-object in-focus condition, second lens group G2 and fourth lens group G4 move to the object side along an optical axis in the lens system according to the third exemplary embodiment.

FOURTH EXEMPLARY EMBODIMENT

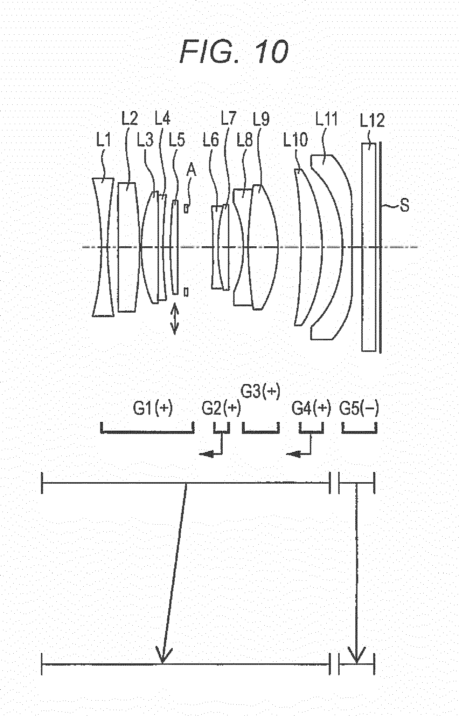

As illustrated in FIG. 10, in a lens system according to the fourth exemplary embodiment, first lens group G1 having positive power includes, in order from an object side to an image side, biconcave first lens element L1, second lens element L2 having a positive meniscus shape with a concave surface facing the object side, biconvex third lens element L3, biconcave fourth lens element L4, and biconvex fifth lens element L5. Third lens element L3 and fourth lens element L4 are cemented to each other.

In the lens system according to the fourth exemplary embodiment, second lens group G2 having positive power includes only a doublet including, in order from the object side to the image side, sixth lens element L6 having a negative meniscus shape with a concave surface facing the image side and biconvex seventh lens element L7. Aperture diaphragm A is disposed between first lens group G1 and second lens group G2.

In the lens system according to the fourth exemplary embodiment, third lens group G3 having positive power includes only a doublet including, in order from the object side to the image side, biconcave eighth lens element L8 and biconvex ninth lens element L9.

In the lens system according to the fourth exemplary embodiment, fourth lens group G4 having positive power has the configuration similar to the first exemplary embodiment.

In the lens system according to the fourth exemplary embodiment, fifth lens group G5 having negative power has the configuration similar to the first exemplary embodiment.

In focusing from an infinity in-focus condition to a close-object in-focus condition, second lens group G2 and fourth lens group G4 move to the object side along an optical axis in the lens system according to the fourth exemplary embodiment.

In the lens system according to the first to fourth exemplary embodiments, first lens group G1 disposed closest to the object side is fixed with respect to image plane S in focusing from an infinity in-focus condition to a close-object in-focus condition. With this, aberration variation due to decentering during manufacture can be kept low. Especially, focusing can be performed, while excellent focusing performance can be maintained with less spherical aberration variation due to focusing.

The lens system according to the first to fourth exemplary embodiments includes the second lens group serving as a first focusing lens group and the fourth lens group serving as a second focusing lens group, as a focusing lens group that moves along the optical axis in focusing from an infinity in-focus condition to a close-object in-focus condition. Since the lens system has two focusing lens groups, capability of correcting aberrations of the focusing lens group in a close-object in-focus condition can be enhanced, whereby more compact lens system can be configured. With the configuration in which two focusing lens groups are provided, correction of spherical aberration due to focusing can be facilitated.

In the first to fourth exemplary embodiments, one of the first focusing lens group and the second focusing lens group has power less than a half of the power of the other. Independent correction purpose is applied to each of the focusing lens groups, whereby correction of curvature of field is facilitated.

In the first to fourth exemplary embodiments, stationary third lens group G3 is provided between the first focusing lens group and the second focusing lens group. This configuration can suppress aberration caused on two focusing lens groups in focusing from an infinity in-focus condition to a close-object in-focus condition.

In the first to fourth exemplary embodiments, both the first focusing lens group and the second focusing lens group include two or less lens elements. This configuration reduces weight of the focusing lens group, whereby quick and silent focusing can be implemented.

In the lens system according to the first to fourth exemplary embodiments, a lens element having an aspherical surface is disposed in third lens group G3 located closest to aperture diaphragm A at the image side. With this configuration, spherical aberration caused at the side closer to the object side than aperture diaphragm A can be reduced.

In the first to fourth exemplary embodiments, both the first focusing lens group and the second focusing lens group are disposed closer to the image side than aperture diaphragm A. With this configuration, aberration of upper and lower rays can sufficiently be corrected, whereby high performance can be attained from infinity to the closest object point.

In the lens systems according to the first to fourth exemplary embodiments, fifth lens group G5 located closest to the image side has negative power. With this configuration, back focus can be shortened, whereby the overall length of the lens system can be decreased.

In the lens system according to the first to third exemplary embodiments, first lens group G1 includes first lens element L1 having negative power, second lens element L2 having positive power, third lens element L3 having negative power, and fourth lens element L4 having positive power. With this configuration, aberration caused on first lens group G1 can satisfactorily be suppressed.

The lens system according to the first to fourth exemplary embodiments are configured such that first lens group G1 to fourth lens group G4 are integrally extended to the object side within the range from a second finite distance to a third finite distance. With this configuration, extremely high performance can be attained from infinity to the closest object point.

The lens systems according to the first to fourth exemplary embodiments are configured such that, in first state M1 to second state M2, when first lens group G1 to fourth lens group G4 which are located closer to the object side than fifth lens group G5 that is a lens group closest to the image side are extended to the object side as one set, aperture diaphragm A is narrowed to increase F-number. With this configuration, an image with less aberration variation at the periphery can be obtained from infinity to the closest object point.

The first to fourth exemplary embodiments have been described above as illustrative examples of the technology described in the present application. However, the technology in the present disclosure is not limited to these, and can be applied to embodiments in which various changes, replacements, additions, and omissions are made.

Conditions that a lens system like the lens systems according to the first to fourth exemplary embodiments can satisfy will be described below. Notably, a plurality of possible conditions are specified for the lens system according to each exemplary embodiment, and the configuration of a lens system satisfying all of the plurality of conditions is the most effective. However, it is possible to obtain a lens system which satisfies an individual condition to provide the effect corresponding to the individual condition.

The lens systems according to the first to fourth exemplary embodiment include, in order from the object side to the image side, first lens group G1 that is fixed with respect to the image plane in focusing from an infinity in-focus condition to a close-object in-focus condition; an aperture diaphragm; second lens group G2 that moves in the direction of the optical axis in the focusing; third lens group G3 that is fixed with respect to the image plane in the focusing; fourth lens group G4 that moves in the direction of the optical axis in the focusing; and fifth lens group G5, wherein the following conditions (1) and (2) are satisfied:

$$2.5 < |f2/f4| < 6.5...(1)$$

$$0.5 < |f/f4| < 1.5...(2)$$

where

f2 is a focal length of second lens group G2,
f4 is a focal length of fourth lens group G4, and
f is a focal length of the entire system in an infinity in-focus condition.

Condition (1) specifies an absolute value of a ratio between the focal lengths of second lens group G2 and fourth lens group G4 which are the focusing lens group. When condition (1) is not satisfied, the focusing lens group becomes heavy, so that quick and silent focusing is difficult to be performed.

Condition (2) specifies an absolute value of a ratio between the focal length of fourth lens group G4 which is the focusing lens group and the focal length of the entire lens system. When condition (2) is not satisfied, the focusing lens group becomes heavy, so that quick and silent focusing is difficult to be performed.

The above effect can further be attained by satisfying the following conditions (1)-1 and (2)-1.

$$2.8 < |f2/f4| < 5.2...(1)\cdot 1$$

$$0.6 < |f/f4| < 0.9...(2)\cdot 1$$

For example, the lens system having the basic configuration like the lens systems according to the first to fourth exemplary embodiments desirably satisfies the following condition (3):

$$vd < 35...(3)$$

where
vd is an Abbe number of a negative lens element composing the lens group closest to the image side.

Condition (3) specifies the Abbe number of at least one negative lens element composing fifth lens group G5 that is the lens group closest to the image side. When this condition is not satisfied, lateral chromatic aberration is increased to deteriorate performance.

For example, the lens system having the basic configuration like the lens systems according to the first to fourth exemplary embodiments desirably satisfies the following condition (4):

$$1.5 < Lf/Lr < 3.0...(4)$$

where

Lf is a distance from a surface of the first lens group G1 to the diaphragm on the optical axis, the surface being closest to the object side, the first lens group being located closer to the object side than the aperture diaphragm is, and
Lr is a distance from aperture diaphragm A to the image plane on the optical axis at the image side of aperture diaphragm A.

Condition (4) specifies a ratio between the distance of the lens groups located closer to the object side than aperture diaphragm A on the optical axis and the distance of the lens groups located closer to the image side than aperture diaphragm A on the optical axis. When the ratio becomes lower than the lower limit of condition (4), the diameter of first lens element L1 is increased. With this, spherical aberration occurring on first lens group G1 is increased, and an incidence angle of ray incident on the image plane becomes sharp, so that it becomes difficult to ensure a peripheral light quantity. When the ratio exceeds the upper limit of condition (4), aberration correction for lower ray is not sufficiently performed. Therefore, lateral chromatic aberration occurs on especially a portion where an image height is large, resulting in that performance is deteriorated.

The above effect can further be attained by satisfying at least one of the following conditions (4)-1 and (4)-2'.

$$1.7 < Lf/Lr...(4)\text{-}1$$

$$Lf/Lr < 2.7...(4)\text{-}2$$

Each lens group composing the lens systems according to the first to fourth exemplary embodiments may only include refractive lens element (specifically, a lens element of a type deflecting light on an interface between mediums having different refractive indices) deflecting incident ray with refraction. However, it is not limited thereto. For example, each lens group may include a diffractive lens element, a hybrid diffractive-refractive lens element, or a gradient index lens element. A diffractive lens element deflects incident ray with diffraction. A hybrid diffractive-refractive lens element deflects incident ray with a combination of diffraction action and refraction action. A gradient index lens element deflects incident ray with gradual variation of the refractive index in a medium. Especially when a diffraction structure is formed on the interface between mediums having different refractive indices in a hybrid diffractive-refractive lens element, wavelength dependency of diffraction efficiency can be improved.

Alternatively, each lens group composing the lens systems according to the first to fourth exemplary embodiments may be a hybrid lens formed by cementing a transparent resin layer made of ultraviolet curable resin on one surface of a lens element made of a glass. In this case, the lens element made of a glass and the transparent resin layer are collectively considered as one lens element, since power of the transparent resin layer is weak. Similarly, when a nearly flat lens element is disposed as well, this lens element is not counted as a lens element, since the nearly flat lens element has weak power.

## FIFTH EXEMPLARY EMBODIMENT

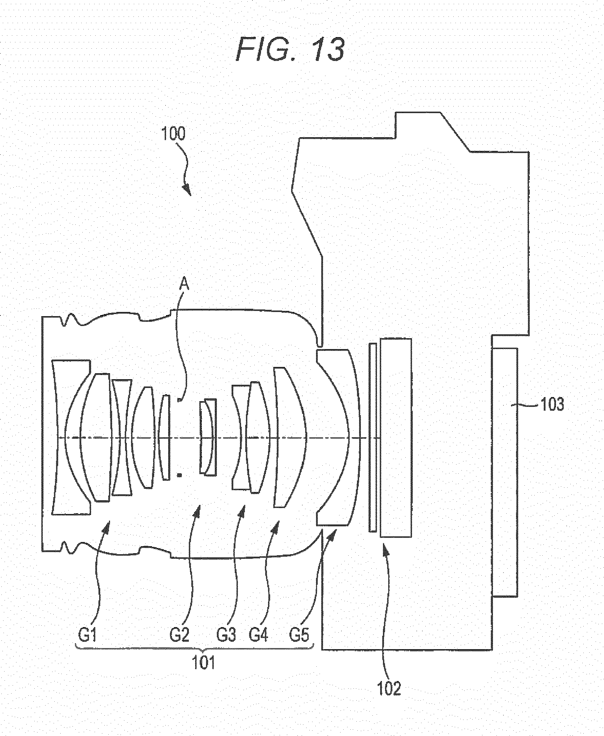

FIG. 13 is a schematic configuration diagram of imaging device 100 according to the fifth exemplary embodiment.

Imaging device 100 according to the fifth exemplary embodiment includes imaging element 102 that receives an optical image formed with lens system 101 and converts the received image into an electric image signal, and display unit 103 displaying the image signal converted by imaging element 102. FIG. 13 illustrates the case in which the lens system according to the first exemplary embodiment is used as lens system 101.

Since lens system 101 according to any one of the first to fourth exemplary embodiments is used in the fifth exemplary embodiment, a compact imaging device having excellent focusing performance can be implemented at low cost. In addition, reduction in size and reduction in cost of entire imaging device 100 according to the fifth exemplary embodiment can also be attained.

While the lens systems according to the first to fourth exemplary embodiments are used as lens system 101 in imaging device 100 according to the fifth exemplary embodiment, these lens systems do not necessarily use all of the focusing range. Specifically, only the range where optical performance is ensured may exclusively be used according to a desired focusing range.

Imaging device 100 including lens system 101 according to any one of the above-described first to fourth exemplary embodiments and an imaging element such as a CCD or CMOS is applicable to a digital still camera, a digital video camera, a camera for a portable information terminal such as smartphone, a surveillance camera in a surveillance system, a Web camera, a vehicle-mounted camera or the like.

The fifth exemplary embodiment has been described above as illustrative examples of the technology disclosed in the present application. However, the technology in the present disclosure is not limited to these, and can be applied to embodiments in which various changes, replacements, additions, and omissions are made.

Numerical Examples for specifically configuring the lens systems according to the first to fourth exemplary embodiments will be described below. In each Numerical Example, the units of length are all "mm", while the units of field angle are all "°" in each Table. Moreover, in each Numerical Example, r is a radius of curvature, d is an axial distance, nd is a refractive index to the d-line, and vd is an Abbe number to the d-line. In surface data in each Numerical Example, one surface number is applied to the surface between doublets. In each Numerical Example, the surface marked with * is aspherical. The aspherical shape is defined by the following equation.

[Equation 1]

$$Z = \frac{h^2/r}{1 + \sqrt{1 - (1+\kappa)(h/r)^2}} + A4h^4 + A6h^6 + A8h^8 + A10h^{10} + A12h^{12}$$

where

Z is a distance from a point on the aspherical surface with height h from an optical axis to a tangent plane at the vertex of the aspherical surface,
h is a height from the optical axis,
r is a curvature of radius at the top,
k is a conic constant, and
An is an n-th-order aspherical coefficient.

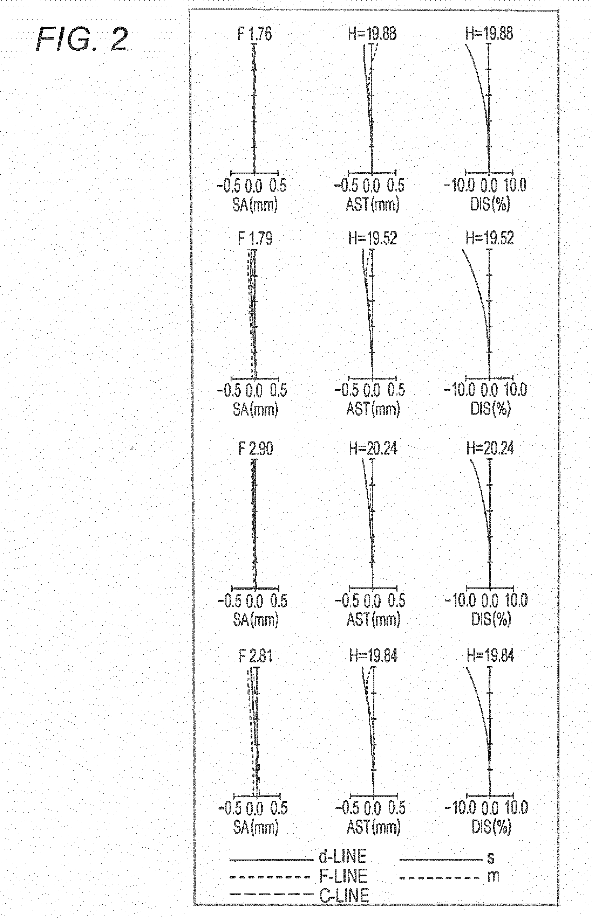

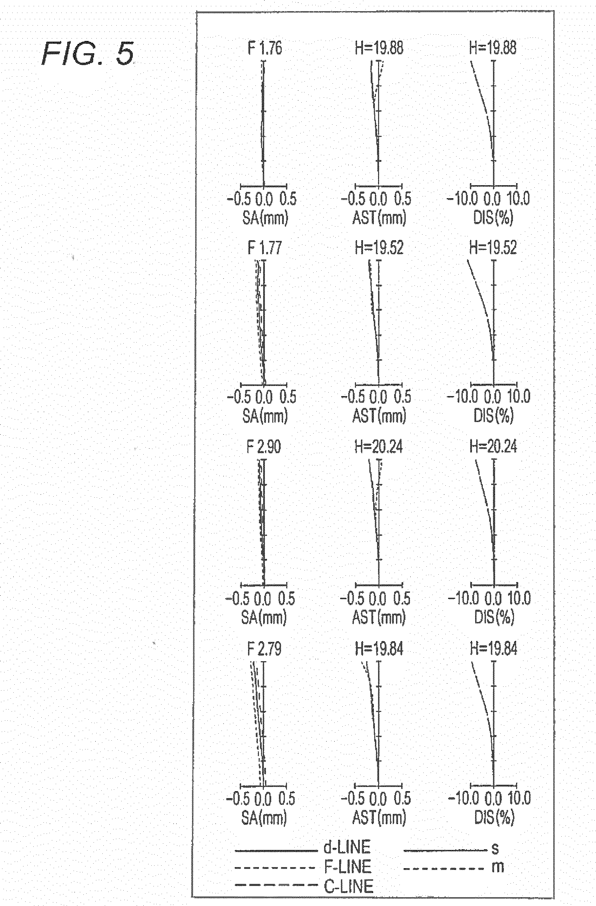

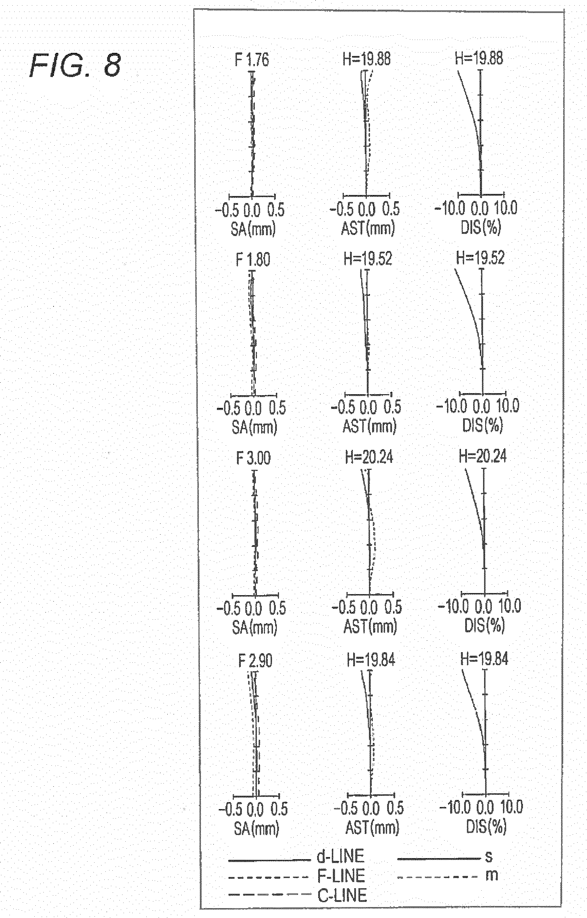

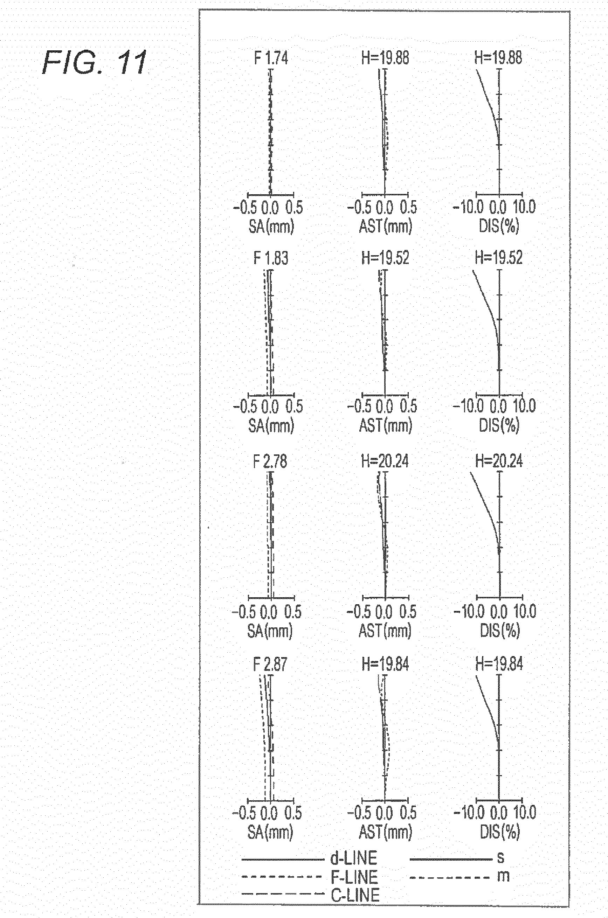

FIGS. 2, 5, 8, and 11 are axial aberration diagrams of the lens systems in an infinity in-focus condition according to the first to fourth exemplary embodiments. In each diagram, (a) shows aberration in an infinity in-focus condition in first state M1, (b) shows aberration in an in-focus condition of the first finite distance object in first state M1, (c) shows aberration in an in-focus condition of the second finite object distance in second state M2, and (d) shows aberration in an in-focus condition of the third finite object distance in second state M2.

Each of the axial aberration diagrams shows spherical aberration (SA (mm)), astigmatism (AST (mm)), and distortion (DIS (%)) in order from the left. In each spherical aberration diagram, a vertical axis indicates F-number (indicated as F in each figure), and the solid line, the short dash line, and the long dash line indicate the characteristics to the d-line, the F-line, and the C-line, respectively. In each astigmatism diagram, the vertical axis indicates an image height (indicated as H in each figure), and the solid line and the dash line indicate characteristics to a sagittal plane (indicated as "s" in each figure) and a meridional plane (indicated as "m" in each figure), respectively. In each distortion diagram, the vertical axis indicates an image height (indicated as H in each figure).

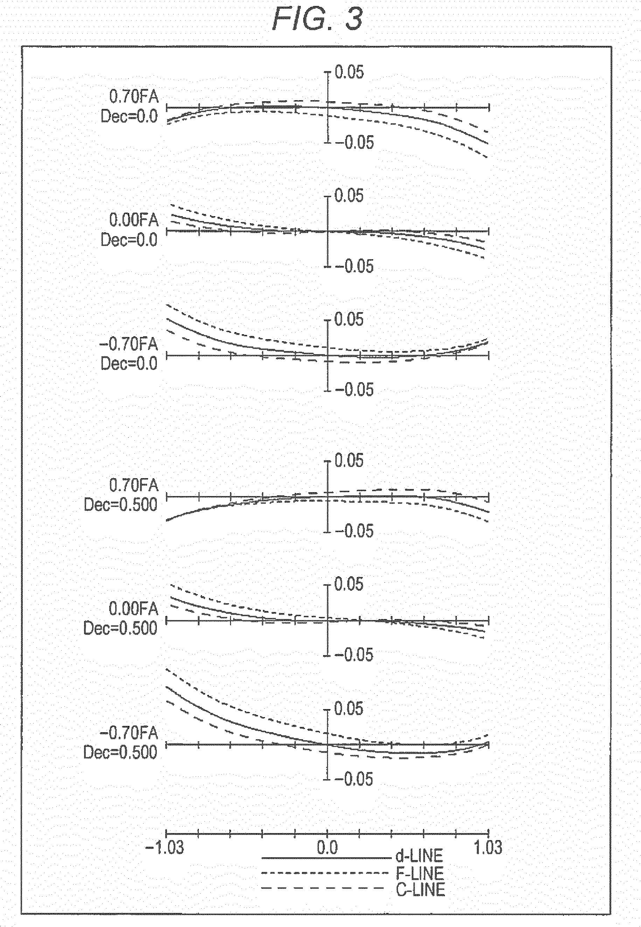

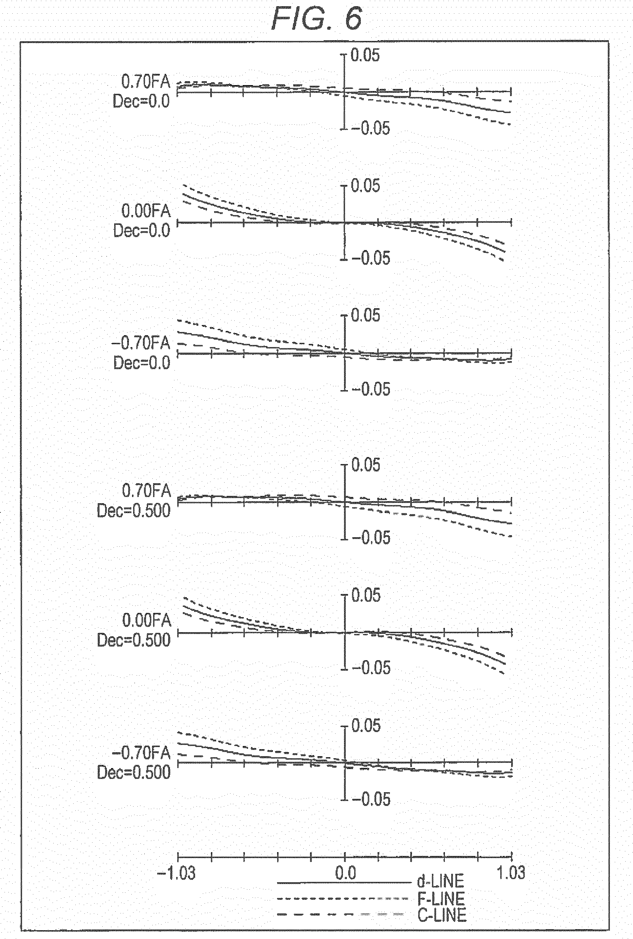

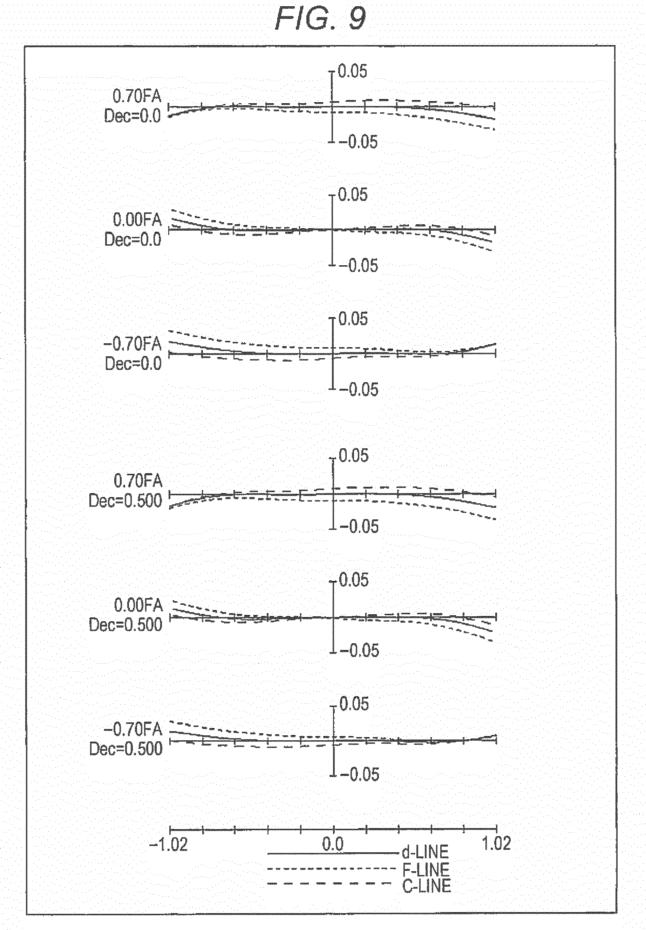

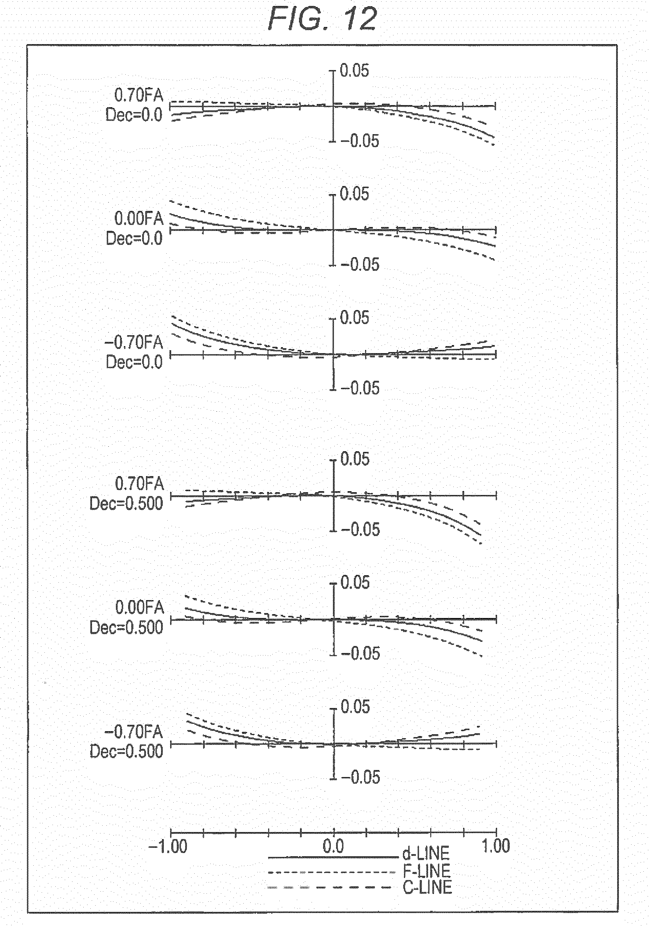

FIGS. 3, 6, 9, and 12 are lateral aberration diagrams of the zoom lens systems according to the first to fourth exemplary embodiments in a basic state in which image blur compensation is not performed and in an image blur compensation state in an infinity in-focus condition.

It is understood from each lateral aberration diagram that satisfactory symmetry is attained in the lateral aberration at the axial image point. Further, when the lateral aberration at the +70% image point and the lateral aberration at the -70% image point are compared with each other in the basic state, all have a small degree of curvature and almost the same inclination in the aberration curve. Thus, decentering coma aberration and decentering astigmatism are small. This indicates that sufficient focusing performance is obtained even in the image blur compensation state. Further, when the image blur compensation angle of a zoom lens system is the same, the amount of parallel translation required for image blur compensation decreases with decreasing focal length of the entire zoom lens system. Thus, at arbitrary zoom positions, sufficient image blur compensation can be performed for image blur compensation angles up to 0.3° without degrading the focusing characteristics.

(Numerical Example 1)

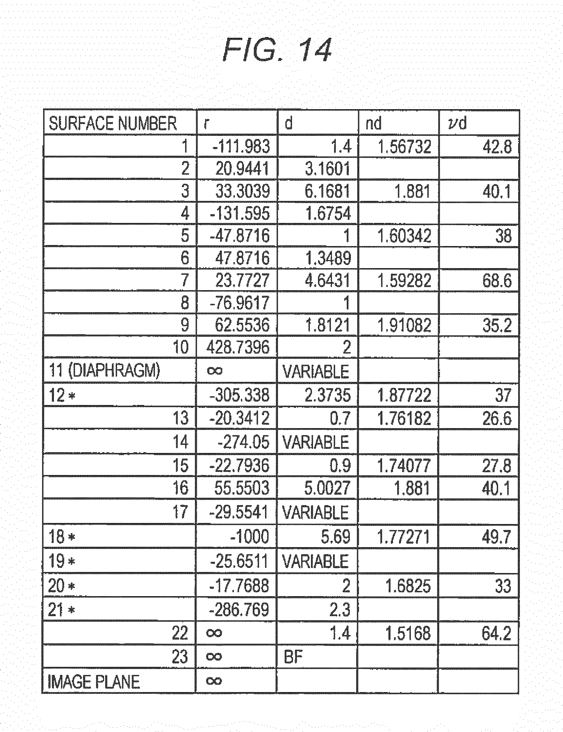

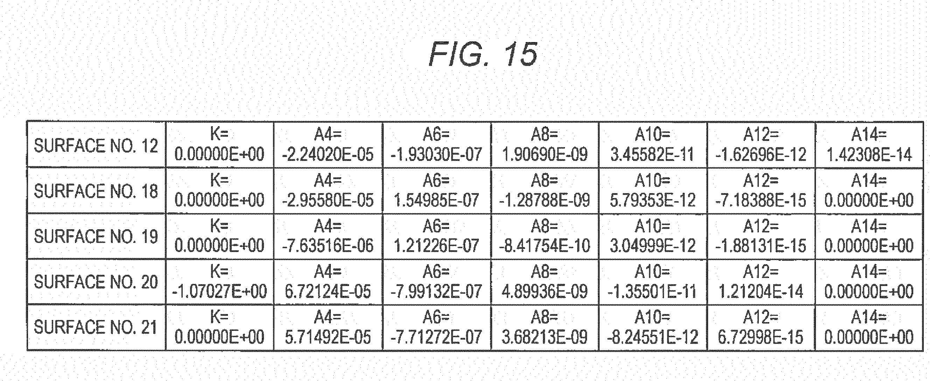

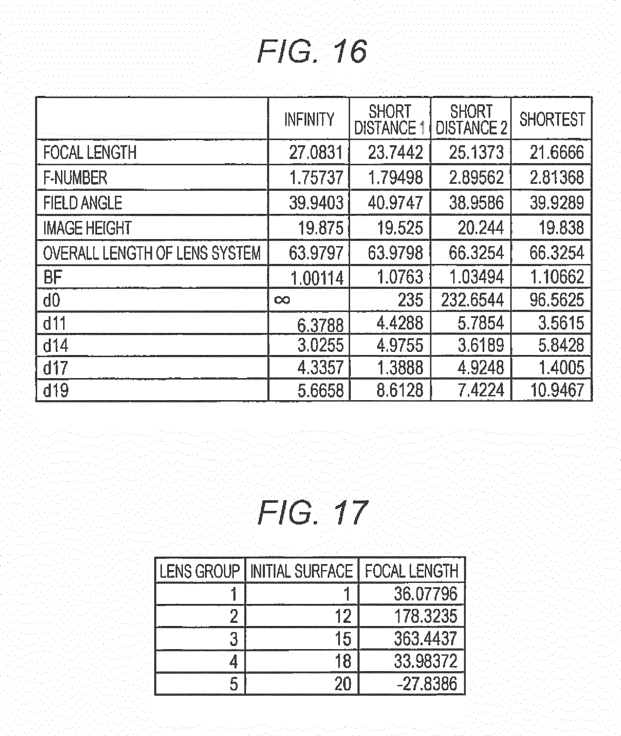

The lens system according to Numerical Example 1 corresponds to the first exemplary embodiment illustrated in FIG. 1. FIG. 14 shows the surface data of the lens system according to Numerical Example 1, FIG. 15 shows the aspherical data, FIG. 16 shows various data, and FIG. 17 shows the data of lens groups.

(Numerical Example 2)

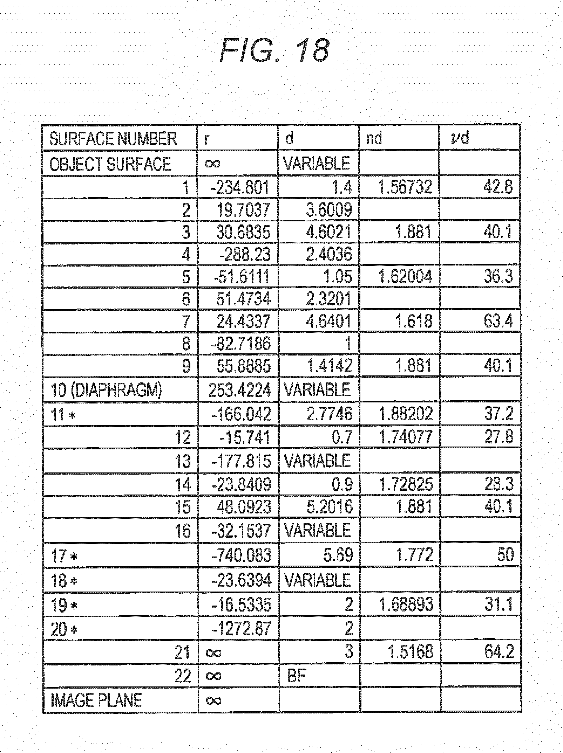

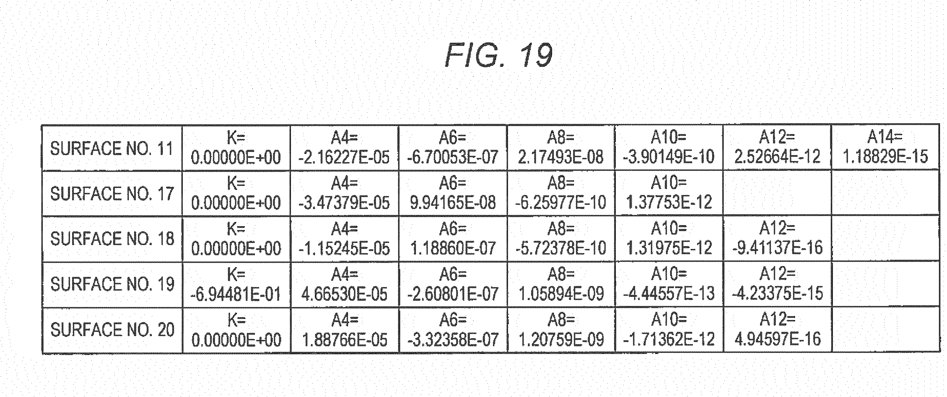

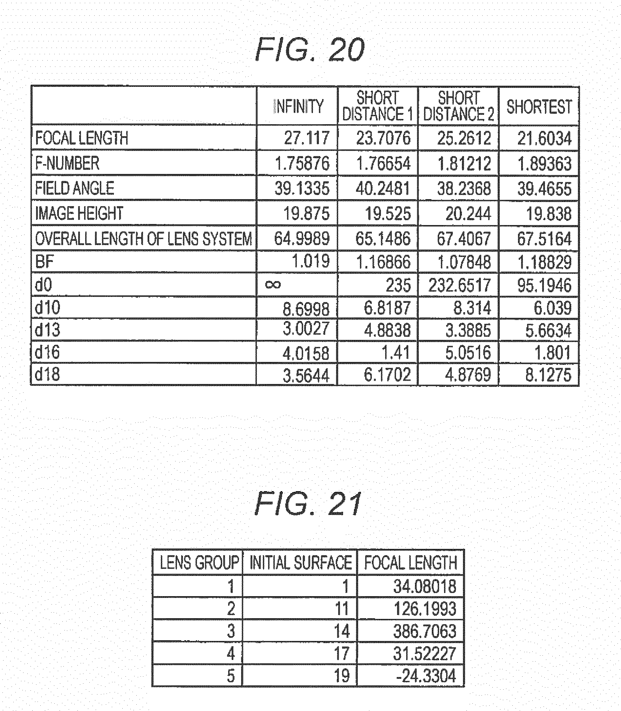

The lens system according to Numerical Example 2 corresponds to the second exemplary embodiment illustrated in FIG. 4. FIG. 18 shows the surface data of the lens system according to Numerical Example 2, FIG. 19 shows the aspherical data, FIG. 20 shows various data, and FIG. 21 shows the data of lens groups.

(Numerical Example 3)

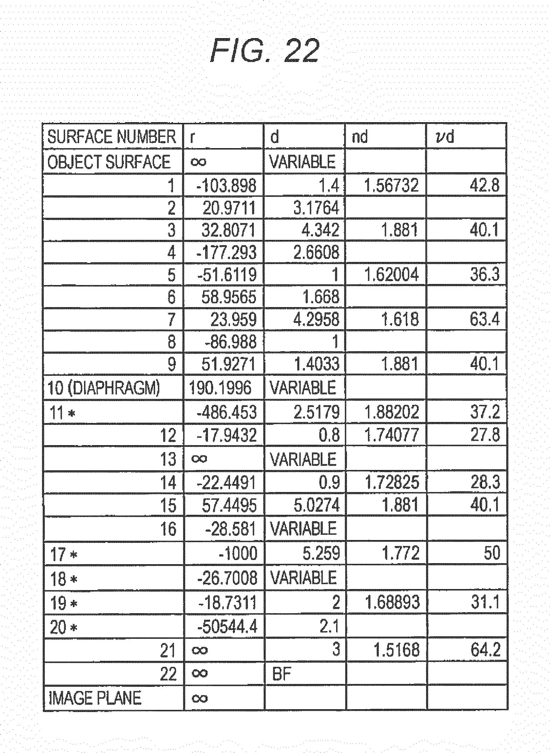

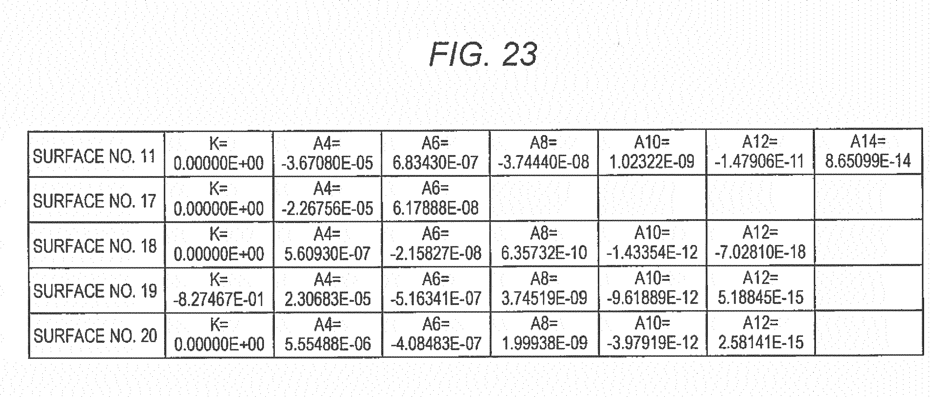

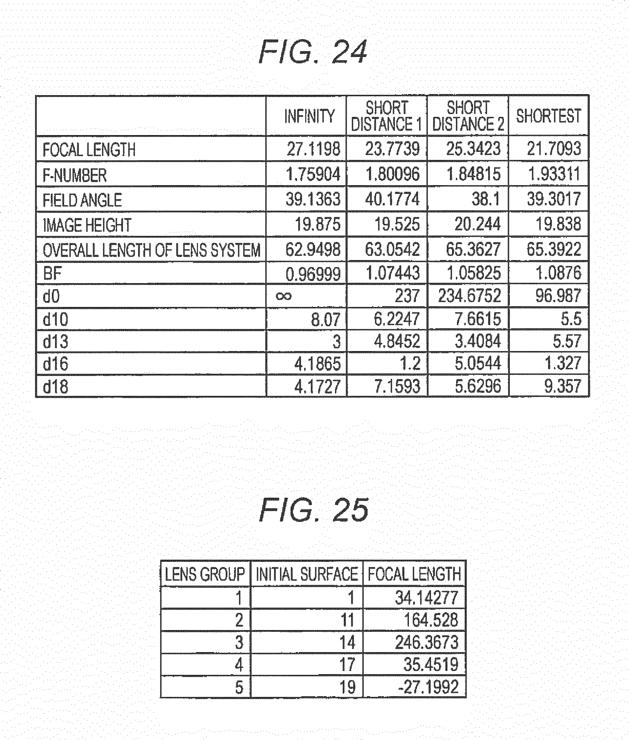

The lens system according to Numerical Example 3 corresponds to the third exemplary embodiment illustrated in FIG. 7. FIG. 22 shows the surface data of the lens system according to Numerical Example 3, FIG. 23 shows the aspherical data, FIG. 24 shows various data, and FIG. 25 shows the data of lens groups.

(Numerical Example 4)

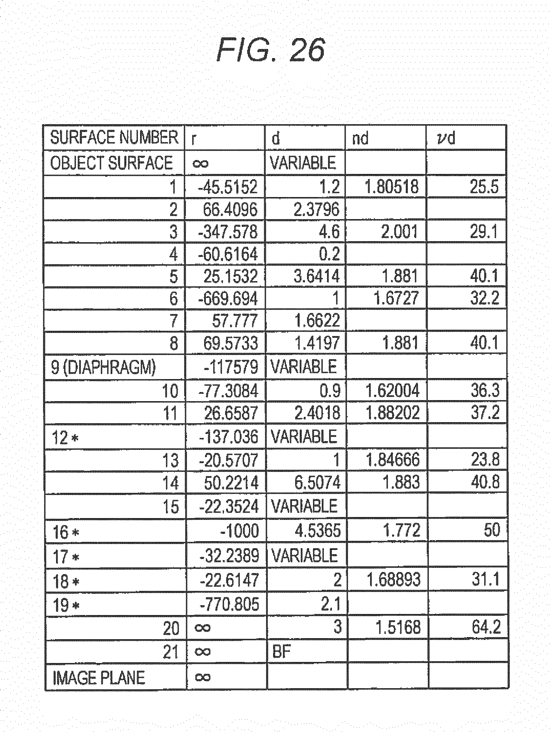

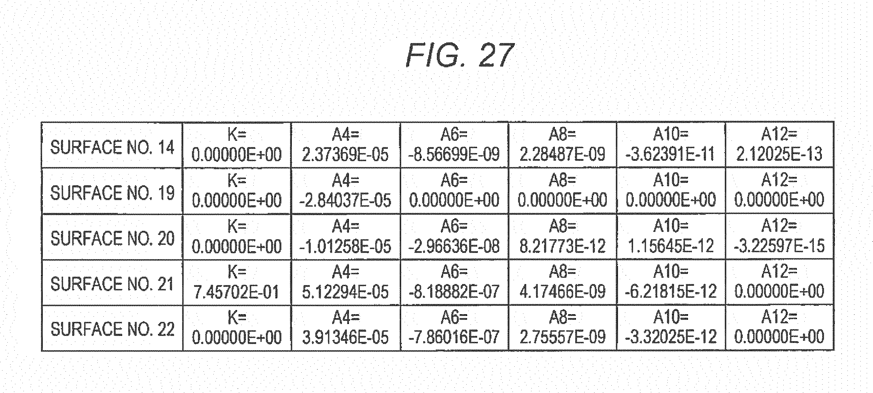

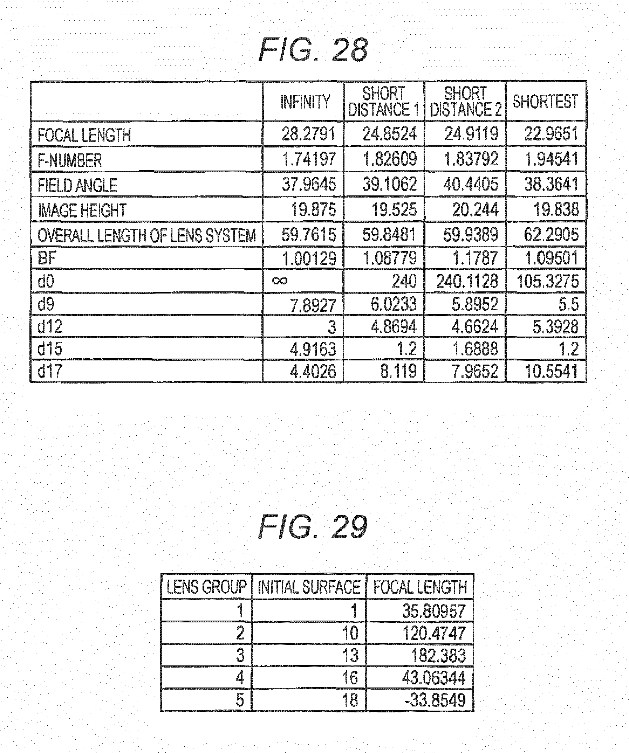

The lens system according to Numerical Example 4 corresponds to the fourth exemplary embodiment illustrated in FIG. 10. FIG. 26 shows the surface data of the lens system according to Numerical Example 4, FIG. 27 shows the aspherical data, FIG. 28 shows various data, and FIG. 29 shows the data of lens groups.
The following Table 1 shows the corresponding values to the individual conditions in the lens systems of each of Numerical Examples.

(Values corresponding to conditions)

[Table 1]

|  | Numerical Example 1 | Numerical Example 2 | Numerical Example 3 | Numerical Example 4 |
|---|---|---|---|---|
| f | 27.08 | 27.12 | 27.12 | 28.28 |
| f2 | 178.32 | 126.20 | 164.53 | 120.47 |
| f4 | 33.98 | 31.52 | 35.45 | 43.06 |
| vd | 33.00 | 31.10 | 31.10 | 31.10 |
| Lf | 24.21 | 22.43 | 20.95 | 16.10 |
| Lr | 40.77 | 42.57 | 42.00 | 43.66 |
| $2.5 < |f2/f4| < 6.5$ | 5.2 | 4.0 | 4.6 | 2.8 |
| $0.5 < |f/f4| < 1.5$ | 0.8 | 0.9 | 0.8 | 0.7 |
| vd < 35 | 33.0 | 31.1 | 31.1 | 31.1 |
| 1.5 < Lr/Lf < 3.0 | 1.7 | 1.9 | 2.0 | 2.7 |

As presented above, the exemplary embodiments have been described above as illustrative examples of the technology in the present disclosure. The accompanying drawings and the detailed description are provided for this purpose.
Thus, elements appearing in the accompanying drawings and the detailed description include not only those that are essential to solving the technical problems set forth herein, but also those that are not essential to solving the technical problems but are merely used to illustrate the technique disclosed herein. Therefore, those non-essential elements should not immediately be taken as being essential for the reason that they are described in the accompanying drawings and/or in the detailed description.
The exemplary embodiments above are for illustrating the technology disclosed herein, and various changes, replacements, additions, and omissions can be made without departing from the scope defined by the claims and equivalents thereto.

INDUSTRIAL APPLICABILITY

The present disclosure is applicable to a digital still camera, a digital video camera, a camera for a portable information terminal such as smartphone, a camera for a PDA (Personal Digital Assistance), a surveillance camera in a surveillance system, a Web camera, a vehicle-mounted camera or the like. In particular, the present disclosure is applicable to a photographing optical system where high image quality is required like in a digital still camera system or a digital video camera system.

REFERENCE MARKS IN THE DRAWINGS

A aperture diaphragm
F focal length of entire system in infinity in-focus condition
f2 focal length of second lens group
f4 focal length of fourth lens group
G1 first lens group
G2 second lens group
G3 third lens group
G4 fourth lens group
G5 fifth lens group
L1 first lens element
L2 second lens element
L3 third lens element
L4 fourth lens element
L5 fifth lens element
L6 sixth lens element
L7 seventh lens element
L8 eighth lens element
L9 ninth lens element
L10 tenth lens element
L11 eleventh lens element
Lf distance from a surface of the first lens group G1 to the diaphragm on the optical axis, the surface being closest to the object side, the first lens group being located closer to the object side than the aperture diaphragm is
Lr distance from aperture diaphragm to image plane on optical axis at image side of aperture diaphragm
S image plane
vd Abbe number of a negative lens element composing the lens group closest to the image side.
100 imaging device
101 lens system
102 imaging element
103 display unit

**Claims**

1. A lens system comprising a plurality of lens groups, each including at least one lens element, the lens system comprising, in order from an object side to an image side:

   a first lens group that is fixed with respect to an image plane in focusing from an infinity in-focus condition to a close-object in-focus condition;
   an aperture diaphragm;
   a second lens group that moves in a direction of an optical axis in the focusing;
   a third lens group that is fixed with respect to the image plane in the focusing;
   a fourth lens group that moves in the direction of the optical axis in the focusing; and
   a lens group closest to the image side,
   wherein the following conditions (1) and (2) are satisfied:

$$2.5 < |\text{f2/f4}| < 6.5 ...(1)$$

$$0.5 < |\text{f/f4}| < 1.5 ...(2)$$

   where

f2 is a focal length of the second lens group,
f4 is a focal length of the fourth lens group, and
f is a focal length of the entire system in an infinity in-focus condition.

2. The lens system according to claim 1, wherein the second lens group and the fourth lens group both include two or less lens elements.

3. The lens system according to claim 1, wherein the lens group closest to the image side includes one negative lens element, and an Abbe number vd of the lens element in the lens group closest to the image side satisfies the following condition (3)::

$$vd < 35...(3).$$

4. The lens system according to claim 1, wherein the second lens group and the fourth lens group are located closer to the image side than the diaphragm is.

5. The lens system according to claim 1, wherein the first lens group comprises, in order from the object side to the image side:

a first lens element having negative power,
a second lens element having positive power,
a third lens element having negative power, and
a fourth lens element having positive power.

6. The lens system according to claim 1, wherein the following condition (4) is satisfied:

$$1.5 < Lf/Lr < 2.5...(4)$$

where

Lf is a distance from a surface of the first lens group to the diaphragm on the optical axis, the surface being closest to the object side, the first lens group being located closer to the object side than the aperture diaphragm is, and
Lr is a distance from the aperture diaphragm to the image plane on the optical axis at the image side of the aperture diaphragm.

7. The lens system according to claim 1, wherein
the lens system has a first photographing state in which focusing is performed within a first focusing range and a second photographing state in which focusing is performed in a focusing range that is nearer than the first focusing range, wherein
the lens groups located closer to the object side than the lens group closest to the image side uniformly move toward the object side in changing from the first photographing state to the second photographing state upon photographing.

8. The lens system according to claim 7, wherein the aperture diaphragm in the second photographing state is narrowed more than the aperture diaphragm in the first photographing state.

9. An imaging device comprising:

a lens system; and
an imaging element that receives an optical image formed by the lens system and converts the received image into an electric image signal,
wherein the lens system comprises a plurality of lens groups, each including at least one lens element, the lens system comprising, in order from an object side to an image side:

a first lens group that is fixed with respect to an image plane in focusing from an infinity in-focus condition to a close-object in-focus condition;
an aperture diaphragm;
a second lens group that moves in a direction of an optical axis in the focusing;
a third lens group that is fixed with respect to the image plane in the focusing;
a fourth lens group that moves in the direction of the optical axis in the focusing; and
a lens group closest to the image side,

wherein the following conditions (1) and (2) are satisfied:

$$2.5 < |f2/f4| < 6.5...(1)$$

$$0.5 < |f/f4| < 1.5...(2)$$

where

f2 is a focal length of the second lens group,
f4 is a focal length of the fourth lens group, and
f is a focal length of the entire system in an infinity in-focus condition.

# FIG. 1

FIG. 2

# FIG. 3

# FIG. 4

FIG. 5

## FIG. 6

# FIG. 7

*FIG. 8*

# FIG. 9

# FIG. 10

*FIG. 11*

F 1.74    H=19.88    H=19.88

-0.5 0.0 0.5   -0.5 0.0 0.5   -10.0 0.0 10.0
SA(mm)    AST(mm)    DIS(%)

F 1.83    H=19.52    H=19.52

-0.5 0.0 0.5   -0.5 0.0 0.5   -10.0 0.0 10.0
SA(mm)    AST(mm)    DIS(%)

F 2.78    H=20.24    H=20.24

-0.5 0.0 0.5   -0.5 0.0 0.5   -10.0 0.0 10.0
SA(mm)    AST(mm)    DIS(%)

F 2.87    H=19.84    H=19.84

-0.5 0.0 0.5   -0.5 0.0 0.5   -10.0 0.0 10.0
SA(mm)    AST(mm)    DIS(%)

——— d-LINE    ——— s
------- F-LINE    ------- m
— — — C-LINE

## FIG. 12

# FIG. 13

100

A

G1  G2  G3  G4  G5

101

102

103

## FIG. 14

| SURFACE NUMBER | r | d | nd | νd |
|---|---|---|---|---|
| 1 | -111.983 | 1.4 | 1.56732 | 42.8 |
| 2 | 20.9441 | 3.1601 | | |
| 3 | 33.3039 | 6.1681 | 1.881 | 40.1 |
| 4 | -131.595 | 1.6754 | | |
| 5 | -47.8716 | 1 | 1.60342 | 38 |
| 6 | 47.8716 | 1.3489 | | |
| 7 | 23.7727 | 4.6431 | 1.59282 | 68.6 |
| 8 | -76.9617 | 1 | | |
| 9 | 62.5536 | 1.8121 | 1.91082 | 35.2 |
| 10 | 428.7396 | 2 | | |
| 11 (DIAPHRAGM) | ∞ | VARIABLE | | |
| 12 * | -305.338 | 2.3735 | 1.87722 | 37 |
| 13 | -20.3412 | 0.7 | 1.76182 | 26.6 |
| 14 | -274.05 | VARIABLE | | |
| 15 | -22.7936 | 0.9 | 1.74077 | 27.8 |
| 16 | 55.5503 | 5.0027 | 1.881 | 40.1 |
| 17 | -29.5541 | VARIABLE | | |
| 18 * | -1000 | 5.69 | 1.77271 | 49.7 |
| 19 * | -25.6511 | VARIABLE | | |
| 20 * | -17.7688 | 2 | 1.6825 | 33 |
| 21 * | -286.769 | 2.3 | | |
| 22 | ∞ | 1.4 | 1.5168 | 64.2 |
| 23 | ∞ | BF | | |
| IMAGE PLANE | ∞ | | | |

## FIG. 15

| | K= | A4= | A6= | A8= | A10= | A12= | A14= |
|---|---|---|---|---|---|---|---|
| SURFACE NO. 12 | 0.00000E+00 | -2.24020E-05 | -1.93030E-07 | 1.90690E-09 | 3.45582E-11 | -1.62696E-12 | 1.42308E-14 |
| SURFACE NO. 18 | 0.00000E+00 | -2.95580E-05 | 1.54985E-07 | -1.28788E-09 | 5.79353E-12 | -7.18388E-15 | 0.00000E+00 |
| SURFACE NO. 19 | 0.00000E+00 | -7.63516E-06 | 1.21226E-07 | -8.41754E-10 | 3.04999E-12 | -1.88131E-15 | 0.00000E+00 |
| SURFACE NO. 20 | -1.07027E+00 | 6.72124E-05 | -7.99132E-07 | 4.89936E-09 | -1.35501E-11 | 1.21204E-14 | 0.00000E+00 |
| SURFACE NO. 21 | 0.00000E+00 | 5.71492E-05 | -7.71272E-07 | 3.68213E-09 | -8.24551E-12 | 6.72998E-15 | 0.00000E+00 |

## FIG. 16

| | INFINITY | SHORT DISTANCE 1 | SHORT DISTANCE 2 | SHORTEST |
|---|---|---|---|---|
| FOCAL LENGTH | 27.0831 | 23.7442 | 25.1373 | 21.6666 |
| F-NUMBER | 1.75737 | 1.79498 | 2.89562 | 2.81368 |
| FIELD ANGLE | 39.9403 | 40.9747 | 38.9586 | 39.9289 |
| IMAGE HEIGHT | 19.875 | 19.525 | 20.244 | 19.838 |
| OVERALL LENGTH OF LENS SYSTEM | 63.9797 | 63.9798 | 66.3254 | 66.3254 |
| BF | 1.00114 | 1.0763 | 1.03494 | 1.10662 |
| d0 | ∞ | 235 | 232.6544 | 96.5625 |
| d11 | 6.3788 | 4.4288 | 5.7854 | 3.5615 |
| d14 | 3.0255 | 4.9755 | 3.6189 | 5.8428 |
| d17 | 4.3357 | 1.3888 | 4.9248 | 1.4005 |
| d19 | 5.6658 | 8.6128 | 7.4224 | 10.9467 |

## FIG. 17

| LENS GROUP | INITIAL SURFACE | FOCAL LENGTH |
|---|---|---|
| 1 | 1 | 36.07796 |
| 2 | 12 | 178.3235 |
| 3 | 15 | 363.4437 |
| 4 | 18 | 33.98372 |
| 5 | 20 | -27.8386 |

# FIG. 18

| SURFACE NUMBER | r | d | nd | νd |
|---|---|---|---|---|
| OBJECT SURFACE | ∞ | VARIABLE | | |
| 1 | -234.801 | 1.4 | 1.56732 | 42.8 |
| 2 | 19.7037 | 3.6009 | | |
| 3 | 30.6835 | 4.6021 | 1.881 | 40.1 |
| 4 | -288.23 | 2.4036 | | |
| 5 | -51.6111 | 1.05 | 1.62004 | 36.3 |
| 6 | 51.4734 | 2.3201 | | |
| 7 | 24.4337 | 4.6401 | 1.618 | 63.4 |
| 8 | -82.7186 | 1 | | |
| 9 | 55.8885 | 1.4142 | 1.881 | 40.1 |
| 10 (DIAPHRAGM) | 253.4224 | VARIABLE | | |
| 11 * | -166.042 | 2.7746 | 1.88202 | 37.2 |
| 12 | -15.741 | 0.7 | 1.74077 | 27.8 |
| 13 | -177.815 | VARIABLE | | |
| 14 | -23.8409 | 0.9 | 1.72825 | 28.3 |
| 15 | 48.0923 | 5.2016 | 1.881 | 40.1 |
| 16 | -32.1537 | VARIABLE | | |
| 17 * | -740.083 | 5.69 | 1.772 | 50 |
| 18 * | -23.6394 | VARIABLE | | |
| 19 * | -16.5335 | 2 | 1.68893 | 31.1 |
| 20 * | -1272.87 | 2 | | |
| 21 | ∞ | 3 | 1.5168 | 64.2 |
| 22 | ∞ | BF | | |
| IMAGE PLANE | ∞ | | | |

## FIG. 19

| | K= | A4= | A6= | A8= | A10= | A12= | A14= |
|---|---|---|---|---|---|---|---|
| SURFACE NO. 11 | 0.00000E+00 | -2.16227E-05 | -6.70053E-07 | 2.17493E-08 | -3.90149E-10 | 2.52664E-12 | 1.18829E-15 |
| SURFACE NO. 17 | 0.00000E+00 | -3.47379E-05 | 9.94165E-08 | -6.25977E-10 | 1.37753E-12 | | |
| SURFACE NO. 18 | 0.00000E+00 | -1.15245E-05 | 1.18860E-07 | -5.72378E-10 | 1.31975E-12 | -9.41137E-16 | |
| SURFACE NO. 19 | -6.94481E-01 | 4.66530E-05 | -2.60801E-07 | 1.05894E-09 | -4.44557E-13 | -4.23375E-15 | |
| SURFACE NO. 20 | 0.00000E+00 | 1.88766E-05 | -3.32358E-07 | 1.20759E-09 | -1.71362E-12 | 4.94597E-16 | |

## FIG. 20

|  | INFINITY | SHORT DISTANCE 1 | SHORT DISTANCE 2 | SHORTEST |
|---|---|---|---|---|
| FOCAL LENGTH | 27.117 | 23.7076 | 25.2612 | 21.6034 |
| F-NUMBER | 1.75876 | 1.76654 | 1.81212 | 1.89363 |
| FIELD ANGLE | 39.1335 | 40.2481 | 38.2368 | 39.4655 |
| IMAGE HEIGHT | 19.875 | 19.525 | 20.244 | 19.838 |
| OVERALL LENGTH OF LENS SYSTEM | 64.9989 | 65.1486 | 67.4067 | 67.5164 |
| BF | 1.019 | 1.16866 | 1.07848 | 1.18829 |
| d0 | ∞ | 235 | 232.6517 | 95.1946 |
| d10 | 8.6998 | 6.8187 | 8.314 | 6.039 |
| d13 | 3.0027 | 4.8838 | 3.3885 | 5.6634 |
| d16 | 4.0158 | 1.41 | 5.0516 | 1.801 |
| d18 | 3.5644 | 6.1702 | 4.8769 | 8.1275 |

## FIG. 21

| LENS GROUP | INITIAL SURFACE | FOCAL LENGTH |
|---|---|---|
| 1 | 1 | 34.08018 |
| 2 | 11 | 126.1993 |
| 3 | 14 | 386.7063 |
| 4 | 17 | 31.52227 |
| 5 | 19 | -24.3304 |

# FIG. 22

| SURFACE NUMBER | r | d | nd | νd |
|---|---|---|---|---|
| OBJECT SURFACE | ∞ | VARIABLE | | |
| 1 | -103.898 | 1.4 | 1.56732 | 42.8 |
| 2 | 20.9711 | 3.1764 | | |
| 3 | 32.8071 | 4.342 | 1.881 | 40.1 |
| 4 | -177.293 | 2.6608 | | |
| 5 | -51.6119 | 1 | 1.62004 | 36.3 |
| 6 | 58.9565 | 1.668 | | |
| 7 | 23.959 | 4.2958 | 1.618 | 63.4 |
| 8 | -86.988 | 1 | | |
| 9 | 51.9271 | 1.4033 | 1.881 | 40.1 |
| 10 (DIAPHRAGM) | 190.1996 | VARIABLE | | |
| 11 * | -486.453 | 2.5179 | 1.88202 | 37.2 |
| 12 | -17.9432 | 0.8 | 1.74077 | 27.8 |
| 13 | ∞ | VARIABLE | | |
| 14 | -22.4491 | 0.9 | 1.72825 | 28.3 |
| 15 | 57.4495 | 5.0274 | 1.881 | 40.1 |
| 16 | -28.581 | VARIABLE | | |
| 17 * | -1000 | 5.259 | 1.772 | 50 |
| 18 * | -26.7008 | VARIABLE | | |
| 19 * | -18.7311 | 2 | 1.68893 | 31.1 |
| 20 * | -50544.4 | 2.1 | | |
| 21 | ∞ | 3 | 1.5168 | 64.2 |
| 22 | ∞ | BF | | |
| IMAGE PLANE | ∞ | | | |

## FIG. 23

| | K= | A4= | A6= | A8= | A10= | A12= | A14= |
|---|---|---|---|---|---|---|---|
| SURFACE NO. 11 | 0.00000E+00 | -3.67080E-05 | 6.83430E-07 | -3.74440E-08 | 1.02322E-09 | -1.47906E-11 | 8.65099E-14 |
| SURFACE NO. 17 | 0.00000E+00 | -2.26756E-05 | 6.17888E-08 | | | | |
| SURFACE NO. 18 | 0.00000E+00 | 5.60930E-07 | -2.15827E-08 | 6.35732E-10 | -1.43354E-12 | -7.02810E-18 | |
| SURFACE NO. 19 | -8.27467E-01 | 2.30683E-05 | -5.16341E-07 | 3.74519E-09 | -9.61889E-12 | 5.18845E-15 | |
| SURFACE NO. 20 | 0.00000E+00 | 5.55488E-06 | -4.08483E-07 | 1.99938E-09 | -3.97919E-12 | 2.58141E-15 | |

EP 3 199 999 A1

## FIG. 24

|  | INFINITY | SHORT DISTANCE 1 | SHORT DISTANCE 2 | SHORTEST |
|---|---|---|---|---|
| FOCAL LENGTH | 27.1198 | 23.7739 | 25.3423 | 21.7093 |
| F-NUMBER | 1.75904 | 1.80096 | 1.84815 | 1.93311 |
| FIELD ANGLE | 39.1363 | 40.1774 | 38.1 | 39.3017 |
| IMAGE HEIGHT | 19.875 | 19.525 | 20.244 | 19.838 |
| OVERALL LENGTH OF LENS SYSTEM | 62.9498 | 63.0542 | 65.3627 | 65.3922 |
| BF | 0.96999 | 1.07443 | 1.05825 | 1.0876 |
| d0 | ∞ | 237 | 234.6752 | 96.987 |
| d10 | 8.07 | 6.2247 | 7.6615 | 5.5 |
| d13 | 3 | 4.8452 | 3.4084 | 5.57 |
| d16 | 4.1865 | 1.2 | 5.0544 | 1.327 |
| d18 | 4.1727 | 7.1593 | 5.6296 | 9.357 |

## FIG. 25

| LENS GROUP | INITIAL SURFACE | FOCAL LENGTH |
|---|---|---|
| 1 | 1 | 34.14277 |
| 2 | 11 | 164.528 |
| 3 | 14 | 246.3673 |
| 4 | 17 | 35.4519 |
| 5 | 19 | -27.1992 |

# FIG. 26

| SURFACE NUMBER | r | d | nd | νd |
|---|---|---|---|---|
| OBJECT SURFACE | ∞ | VARIABLE | | |
| 1 | -45.5152 | 1.2 | 1.80518 | 25.5 |
| 2 | 66.4096 | 2.3796 | | |
| 3 | -347.578 | 4.6 | 2.001 | 29.1 |
| 4 | -60.6164 | 0.2 | | |
| 5 | 25.1532 | 3.6414 | 1.881 | 40.1 |
| 6 | -669.694 | 1 | 1.6727 | 32.2 |
| 7 | 57.777 | 1.6622 | | |
| 8 | 69.5733 | 1.4197 | 1.881 | 40.1 |
| 9 (DIAPHRAGM) | -117579 | VARIABLE | | |
| 10 | -77.3084 | 0.9 | 1.62004 | 36.3 |
| 11 | 26.6587 | 2.4018 | 1.88202 | 37.2 |
| 12 * | -137.036 | VARIABLE | | |
| 13 | -20.5707 | 1 | 1.84666 | 23.8 |
| 14 | 50.2214 | 6.5074 | 1.883 | 40.8 |
| 15 | -22.3524 | VARIABLE | | |
| 16 * | -1000 | 4.5365 | 1.772 | 50 |
| 17 * | -32.2389 | VARIABLE | | |
| 18 * | -22.6147 | 2 | 1.68893 | 31.1 |
| 19 * | -770.805 | 2.1 | | |
| 20 | ∞ | 3 | 1.5168 | 64.2 |
| 21 | ∞ | BF | | |
| IMAGE PLANE | ∞ | | | |

## FIG. 27

| | K= | A4= | A6= | A8= | A10= | A12= |
|---|---|---|---|---|---|---|
| SURFACE NO. 14 | 0.00000E+00 | 2.37369E-05 | -8.56699E-09 | 2.28487E-09 | -3.62391E-11 | 2.12025E-13 |
| SURFACE NO. 19 | 0.00000E+00 | -2.84037E-05 | 0.00000E+00 | 0.00000E+00 | 0.00000E+00 | 0.00000E+00 |
| SURFACE NO. 20 | 0.00000E+00 | -1.01258E-05 | -2.96636E-08 | 8.21773E-12 | 1.15645E-12 | -3.22597E-15 |
| SURFACE NO. 21 | 7.45702E-01 | 5.12294E-05 | -8.18882E-07 | 4.17466E-09 | -6.21815E-12 | 0.00000E+00 |
| SURFACE NO. 22 | 0.00000E+00 | 3.91346E-05 | -7.86016E-07 | 2.75557E-09 | -3.32025E-12 | 0.00000E+00 |

## FIG. 28

|  | INFINITY | SHORT DISTANCE 1 | SHORT DISTANCE 2 | SHORTEST |
|---|---|---|---|---|
| FOCAL LENGTH | 28.2791 | 24.8524 | 24.9119 | 22.9651 |
| F-NUMBER | 1.74197 | 1.82609 | 1.83792 | 1.94541 |
| FIELD ANGLE | 37.9645 | 39.1062 | 40.4405 | 38.3641 |
| IMAGE HEIGHT | 19.875 | 19.525 | 20.244 | 19.838 |
| OVERALL LENGTH OF LENS SYSTEM | 59.7615 | 59.8481 | 59.9389 | 62.2905 |
| BF | 1.00129 | 1.08779 | 1.1787 | 1.09501 |
| d0 | ∞ | 240 | 240.1128 | 105.3275 |
| d9 | 7.8927 | 6.0233 | 5.8952 | 5.5 |
| d12 | 3 | 4.8694 | 4.6624 | 5.3928 |
| d15 | 4.9163 | 1.2 | 1.6888 | 1.2 |
| d17 | 4.4026 | 8.119 | 7.9652 | 10.5541 |

## FIG. 29

| LENS GROUP | INITIAL SURFACE | FOCAL LENGTH |
|---|---|---|
| 1 | 1 | 35.80957 |
| 2 | 10 | 120.4747 |
| 3 | 13 | 182.383 |
| 4 | 16 | 43.06344 |
| 5 | 18 | -33.8549 |

<div align="center">

**INTERNATIONAL SEARCH REPORT**

</div>

| International application No. |
|---|
| PCT/JP2015/004749 |

**A. CLASSIFICATION OF SUBJECT MATTER**
*G02B13/00*(2006.01)i

According to International Patent Classification (IPC) or to both national classification and IPC

**B. FIELDS SEARCHED**

Minimum documentation searched (classification system followed by classification symbols)
G02B9/00-1708, G02B21/02-21/01, G02B25/00-25/04

Documentation searched other than minimum documentation to the extent that such documents are included in the fields searched
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-72705 A (Tochigi Nikon Corp. et al.), 16 March 1999 (16.03.1999), entire text; all drawings; particularly, 1st examples (Family: none) | 1-9 |
| A | JP 2014-142601 A (Panasonic Corp.), 07 August 2014 (07.08.2014), entire text; all drawings; particularly, 1st, 2nd, 5th, 6th examples & US 2014/0184887 A1 entire text; all drawings; particularly, embodiments 1 to 2, 5 to 6; numerical examples 1 to 2, 5 to 6 & US 9081166 B2 | 1-9 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 November 2015 (20.11.15) | 01 December 2015 (01.12.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (July 2009)

## INTERNATIONAL SEARCH REPORT

| International application No. |
|---|
| PCT/JP2015/004749 |

C (Continuation). DOCUMENTS CONSIDERED TO BE RELEVANT

| Category* | Citation of document, with indication, where appropriate, of the relevant passages | Relevant to claim No. |
|---|---|---|
| A | US 2014/0240554 A1 (Panasonic Corp.), 28 August 2014 (28.08.2014), entire text; all drawings; particularly, embodiment 5; numerical example 5 & US 9172882 B2 & JP 2014-186306 A entire text; all drawings; particularly, carrying-out mode 5; numerical example 5 | 1-9 |
| A | WO 2014/118865 A1 (Panasonic Corp.), 07 August 2014 (07.08.2014), entire text; all drawings; particularly, carrying-out mode 1; numerical example 1 & US 2015/0312454 A entire text; all drawings; particularly, embodiment 1; numerical example 1 & CN 104969109 A | 1-9 |
| A | JP 2014-160229 A (Panasonic Corp.), 04 September 2014 (04.09.2014), entire text; all drawings; particularly, carrying-out modes 1, 2; numerical examples 1, 2 & US 2014/0211082 A1 embodiments 1 to 2; numerical examples 1 to 2 | 1-9 |
| A | JP 2014-52413 A (Canon Inc.), 20 March 2014 (20.03.2014), entire text; all drawings; particularly, examples 1 to 3; numerical examples 1 to 3 (Family: none) | 1-9 |

Form PCT/ISA/210 (continuation of second sheet) (July 2009)

**EP 3 199 999 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012168456 A